(19) Europäisches Patentamt
European Patent Office
Office européen des brevets

(11) Veröffentlichungsnummer: **0 226 098**
**B1**

(12) # EUROPÄISCHE PATENTSCHRIFT

(45) Veröffentlichungstag der Patentschrift: **01.08.90**

(21) Anmeldenummer: **86116551.2**

(22) Anmeldetag: **28.11.86**

(51) Int. Cl.⁵: **C08L 27/06,** C08L 51/00, C08K 5/00, C08K 5/19, H01M 2/16 // (C08L27/06, 51:00),(C08L51/00, 27:06)

(54) **Sinterfähige, feinteilige Formmasse auf Basis von Vinylchlorid-Polymerisaten.**

(30) Priorität: **07.12.85 DE 3543305**

(43) Veröffentlichungstag der Anmeldung: **24.06.87 Patentblatt 87/26**

(45) Bekanntmachung des Hinweises auf die Patenterteilung: **01.08.90 Patentblatt 90/31**

(84) Benannte Vertragsstaaten: **DE**

(56) Entgegenhaltungen:
**EP-A- 0 040 758**
**FR-A- 2 219 956**

(73) Patentinhaber: **HOECHST AKTIENGESELLSCHAFT, Postfach 80 03 20, D-6230 Frankfurt am Main 80(DE)**

(72) Erfinder: **Engelmann, Manfred, Dr., Kantstrasse 5, D-8269 Burgkirchen(DE)**
Erfinder: **Kraus, Helmut, Dr., Thalhauser Strasse 20, D-8269 Burgkirchen(DE)**
Erfinder: **Plewan, Otto, Bischof-Sailer-Strasse 15, D-8262 Neuötting(DE)**
Erfinder: **Klippert, Heinz, Dr., Hochfellnstrasse 14, D-8269 Burgkirchen(DE)**

EP 0 226 098 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Formmasse, die im wesentlichen aus einem Gemisch von einem durch Suspensionspolymerisation erzeugten sinterfähigen Vinylchlorid-Ethylen-Vinylacetat-Pfropfcopolymeren, mindestens einem weiteren sinterfähigen Vinylchlorid-Polymeren und mindestens einem Tensid besteht.

Es ist bekannt, Polyvinylchlorid zur Herstellung von gesinterten Formkörpern, beispielsweise von Separatorplatten für elektrische Zellen, einzusetzen. Entsprechende Formmassen wurden in den deutschen Offenlegungsschriften Nr. 21 27 654, 23 10 431, 24 02 314, 26 46 595 und 30 18 922 beschrieben.

Alle diese Formmassen ergeben poröse gesinterte Formkörper, beispielsweise Separatorplatten, die vergleichsweise hart und steif sind, so daß sie bei Biegung um eine feste Kante, bereits bei Biegewinkeln unter 120 °, ganz oder teilweise brechen. Solche Materialien sind zur Herstellung von sogenannten Separator-Taschen ungeeignet, da hierzu flexible Platten benötigt werden, die auch bei Biegung um 180 ° keine Risse aufweisen.

Solche flexiblen porösen Platten können aus Formmassen erzeugt werden, wie sie in der deutschen Offenlegungsschrift Nr. 32 47 472 beschrieben sind, jedoch sind die so hergestellten Platten lappig und haben verminderte Reißfestigkeit, wodurch die Verarbeitbarkeit zu den Separatorplatten erschwert wird. Ferner ist der Temperaturbereich beim Sintern solcher Formmassen enger, wodurch es schwieriger wird, einen bestimmten angestrebten Durchgangswiderstand der Platten beim Sintern zu erreichen.

In der Patentanmeldung P 34 26 929.0 wird vorgeschlagen, eine Mischung eines sinterfähigen Polymeren nach DE-OS 32 47 472 mit einem anderen sinterfähigen Polymeren auf Vinylchlorid-Basis, welches für sich allein verarbeitet, gesinterte Platten ergibt, die nicht flexibel sind und völlig unzureichende Biegewinkel zeigen, zu verwenden, wobei Formmassen erhalten werden, die gesinterte, poröse Platten mit verbesserten Biegewinkeln sowie guter Steifigkeit und Reißfestigkeit ergeben. Eine solche Mischung ist ferner beim Sintern weniger empfindlich als die unvermischten sinterfähigen Polymeren nach DE-OS 32 47 472.

Es wurde nun gefunden, daß eine Mischung von einem sinterfähigen Pfropfcopolymerisat des Vinylchlorids auf ein Ethylen-Vinylacetat-Copolymeres mit mindestens einem sinterfähigen Polymerisat, das weitgehend aus polymerisierten Einheiten des Vinylchlorids besteht, ebenfalls zu Formmassen führt, die gesinterte, poröse Platten mit gleich guten Eigenschaften wie die Formmassen nach P 34 26 929.0 ergeben. Der Vorteil der neuen Formmasse ist, daß keine Acrylsäure-Alkylester zur Herstellung des in der Mischung eingesetzten Copolymerisates verwendet werden müssen, wodurch die Herstellung der Formmasse vereinfacht und wirtschaftlich günstiger wird.

Die neue sinterfähige, feinteilige Formmasse besteht aus

I) 99,95 bis 95 Gew.-%, bezogen auf die Formmasse von einem Gemisch aus mindestens zwei Polymeren auf Basis von Vinylchlorid, in dem jedes der Polymeren einen K-Wert von 55 bis 90 und die Polymerenmischung eine mittlere Korngröße von 10 bis 50 µm, ein Schüttgewicht von 400 bis 700 g/dm$^3$ und eine Kornverteilung von
99 bis 30 Gew.-%, bezogen auf die Mischung < 33 µm
1 bis 60 Gew.-%, bezogen auf die Mischung von 33 bis 63 µm
0 bis 9 Gew.-%, bezogen auf die Mischung von 63 bis 125 µm und
0 bis 1 Gew.-%, bezogen auf die Mischung >125 µm
aufweist und

II) 0,05 bis 5 Gew.-%, bezogen auf die Formmasse von mindestens einem wasserlöslichen Tensid, das ein Bestandteil eines oder mehrerer Polymerer sein kann, die vorstehend unter I genannt sind,

und ist dadurch gekennzeichnet, daß das Polymerengemisch I) enthält:

A) 70 bis 15 Gew.-%, bezogen auf das Polymerengemisch, von einem durch Suspensions-Polymerisation in wäßriger Phase hergestellten, sinterfähigen Pfropf-Copolymeren, dessen Polymeranteil besteht aus

a) 92 bis 75 Gew.-%, bezogen auf das Pfropfcopolymere, polymerisierten Einheiten des Vinylchlorids und

b) 8 bis 25 Gew.-%, bezogen auf das Pfropf-Copolymere, eines einpolymerisierten Copolymeren, das Ethylen und Vinylacetat im Gewichtsverhältnis 7 : 3 bis 3 : 7 enthält, sowie

B) 30 bis 85 Gew.-%, bezogen auf das Polymerengemisch, von einem oder mehreren sinterfähigen Polymeren, das (die) weitgehend aus polymerisierten Einheiten des Vinylchlorids besteht (bestehen), mit der Maßgabe, daß das Polymerengemisch I) 2 bis 12 Gew.-%, bezogen auf dieses Gemisch, einpolymerisiertes Copolymeres aus Ethylen und Vinylacetat enthält.

Werden von der Komponente A weniger als 15 Gew.-% (bzw. von der Komponente B mehr als 85 Gew.-%), bezogen auf das Polymerengemisch, verwendet, so werden aus der Formmasse gesinterte Platten erhalten, die ungenügende Biegewinkel (Meßmethode siehe später) aufweisen. Enthält das Polymerengemisch mehr als 70 Gew.-% von der Komponente A (bzw. weniger als 30 Gew.-% von der Komponente B), so nimmt ebenfalls der Biegewinkel der gesinterten Platten ab. Außerdem wird eine wirtschaftliche Sinterplatten-Herstellung erschwert, weil der Bereich bezüglich Temperatur und Verweilzeit beim Sintern eng wird und dadurch schwer einzuhalten ist.
Vorzugsweise werden von der Komponente A 20 bis 50 Gew.-% und von der Komponente B 80 bis 50 Gew.-% verwendet.

Die Komponente A soll zu 8 bis 25 Gew.-% aus einem einpolmyerisierten Ethylen-Vinylacetat-Copolymeren bestehen. Enthält die Komponente A weniger als 8 Gew.-% Copolymerisat, so werden Formmassen erhalten,die nicht mehr zu ausreichend flexiblen Platten gesintert werden können, der Biegewinkel bleibt unzureichend.
Enthält die Komponente A mehr als 25 Gew.-% Ethylen-Vinylacetat-Copolymerisat, so wird eine Formmasse erhalten, die gesinterte Platten für elektrische Zellen mit unerwünscht hohem Durchgangswiderstand ergibt.

Vorzugsweise soll die Komponente A 10 bis 20 Gew.-% eines einpolymerisierten Ethylen-Vinylacetat-Copolymeren enthalten.

Zur Herstellung der Komponente A wird ein Copolymeres verwendet, welches Ethylen und Vinylacetat im Gewichtsverhältnis 7 : 3 bis 3 : 7 enthält, liegt der Ethylengehalt des Copolymeren über 70 Gew.-%, treten Schwierigkeiten bei der Herstellung des Vinylchlorid-Pfropfcopolymeren auf, liegt der Vinylacetat-Gehalt über 70 Gew.-%, so geben die damit erzeugten Vinylchlorid-Pfropfcopolymeren beim erfindungsgemäßen Einsatz keine ausreichend flexiblen, gesinterten Platten. Zweckmäßig hat das Ethylen-Vinylacetat-Copolymere ein mittleres Molgewicht (osmotisch gemessen) von 10 000 bis 100 000.

Die Komponente B des erfindungsgemäßen Polymerengemisches I) besteht aus einem sinterfähigen Polymeren, das weitgehend aus polymerisierten Einheiten des Vinylchlorids besteht. Es können auch mehrere solcher Polymerer eingesetzt werden. Eines oder mehrere dieser Polymeren können geringe Mengen, beispielsweise 2 oder 3 Gew.-%, bezogen auf das jeweilige Polymere, von polymerisierten Einheiten anderer Monomerer, die mit Vinylchlorid copolymerisierbar sind, enthalten, jedoch ist dies im allgemeinen nicht erforderlich. Als Komponente B können durch Emulsions-, Suspensions- oder Massepolymerisation erzeugte Polymere verwendet werden.
Vorzugsweise werden Homopolymere des Vinylchlorids eingesetzt.

Die als Komponente B verwendeten Polymeren können nach konventionellen Verfahren hergestellt worden sein oder beispielsweise wie in den deutschen Offenlegungsschriften 23 10 431, 24 02 314 und 26 46 595 beschrieben.

Sofern die als Komponente B dienenden Polymeren nach dem Suspensions- oder Masseverfahren polymerisiert werden, kann auf die Zugabe eines Emulgators verzichtet werden, wenn durch entsprechende Bewegung der Reaktionsmischung eine Korngrößenverteilung erreicht werden kann, wie sie oben näher beschrieben ist. Sofern das Polymere durch Suspensionspolymerisation erzeugt wird, ist der Einsatz einer Emulgatorsäure, wie er beispielsweise in den deutschen Offenlegungsschriften 23 10 431 und 24 02 314 beschrieben ist, entbehrlich, wenn zweckmäßig nach Beendigung der Polymerisation, aber vor der Trocknung, im Ansatz 0,01 bis 5 Gew.-%, bezogen auf trockenes Polymeres, von einer Säure zugesetzt werden, deren pKs-Wert in wäßriger Lösung bei 20 °C höchstens 3 beträgt.

Sowohl als Komponente A wie auch als Komponente B des erfindungsgemäßen Polymeren-Gemisches sind Polymere einzusetzen, welche sinterfähig sind. "Sinterfähig" im Sinne der vorliegenden Erfindung ist ein Polymeres dann, wenn es in 0,4 mm starker gleichmäßiger Schicht auf eine Fläche aufgeschüttet und anschließend in 225 °C heißer Luft während 2 bis 4 Minuten gesintert wird, Platten ergibt, die folgenden Forderungen genügen:
Reißfestigkeitmindestens 3 N/mm$^2$
Reißdehnungmindestens 3 %
Porositätmindestens 5 cm$^3$/100 g Probe
max. Porengrößehöchstens 75 µm.
Genauere Angaben zu den Meßmethoden siehe weiter unten.

Das Polymerengemisch I) soll soviel von der Komponente A enthalten, daß der Gehalt des Gemisches an einpolymerisierten Copolymeren aus Ethylen und Vinylacetat 2 bis 12 Gew.-%, bezogen auf das Gemisch, beträgt.
Unter 2 Gew.-% werden aus der Formmasse keine ausreichend flexiblen gesinterten Platten erhalten. Über 12 Gew.-% wird bezüglich der Flexiblität der gesinterten Platten keine Verbesserung mehr erzielt, so daß höhere Gehalte an einpolymerisierten Ethylen-Vinylacetat-Copolymeren die Formmasse unnötig verteuern würden. Außerdem wird bei höheren Gehalten der Bereich, in dem gute gesinterte Platten erhalten werden, im allgemeinen enger, was die Produktion solcher Platten empfindlicher macht.
Vorzugsweise wird ein Polymerengemisch I) verwendet mit einem Gehalt an einpolymerisiertem Copolymeren von 3 bis 7 Gew.-%.

Die Formmasse enthält 0,05 bis 5 Gew.-%, bezogen auf die Formmasse, von mindestens einem Tensid. Unter 0,05 Gew.-% können aus der Formmasse nur Sinterkörper erhalten werden, die nicht das gewünschte Eigenschaftsbild aufweisen, über 5 Gew.-% wird keine Verbesserung der Eigenschaften, häufig sogar eine Verschlechterung festgestellt, weshalb höhere Zusätze unnötig sind. Vorzugsweise enthält die Formmasse 0,05 bis 2 Gew.-% von mindestens einem Tensid. Dieses Tensid bzw. diese Tenside können ein Bestandteil des oder der Polymeren sein, die als Komponente A und/oder die als Komponente B im Polymerengemisch I) vorliegen. Der Tensidgehalt des oder der Polymeren kann bei der Herstellung des Polymeren vor, während oder nach der Polymerisation zugesetzt worden sein, wie beispielsweise in den deutschen Offenlegungsschriften Nr. 23 10 431, 24 02 314, 26 46 595 und 30 18 922 beschrieben. Tenside sowie ihre Herstellung sind beispielsweise beschrieben in Ullmanns Enzyklopädie der technischen Chemie, 4. Auflage, Bd. 22 (1982), S. 467, rechte Spalte, bis S. 500, linke Spalte.

Bevorzugt werden Tenside eingesetzt, die für die Polymerisation von VC geeignete oberflächenaktive Emulgatoren sind. Solche Emulgatoren sind beispielsweise beschrieben in H. Kainer "Polyvinylchlorid und Vinylchlorid-Mischpolymerisate", Springer Verlag/Berlin, 1965, S. 35 Mitte bis S. 46 oben, besonders geeignet sind Emulgatoren, deren HIB-Wert zwischen 10 und 40 liegt. Der HIB-Wert kann nach verschiedenen Methoden bestimmt werden, siehe Römpps Chemie Lexikon, 7. Auflage, Stuttgart, 1973, Bd. 3 H - L, Seite 1478, rechte Spalte.

Beispielsweise sind folgende Emulgatoren geeignet: Alkali-, Erdalkali- oder Ammoniumsalze von Fettsäuren wie Laurin-, Palmitin- oder Stearinsäure; von sauren Fettalkohol-Schwefelsäureestern, von Sulfobernsteinsäuredialkylestern, sowie die Alkali- und Ammoniumsalze von epoxygruppenhaltigen Fettsäuren wie Epoxystearinsäure, von Umsetzungsprodukten von Persäuren, zum Beispiel Peressigsäure mit ungesättigten Fettsäuren wie Öl- oder Linolsäure, oder ungesättigten Oxyfettsäuren wie Rizinolsäure, ferner Alkylsulfonsäuren mit mindestens 8 C-Atomen sowie Alkylarylsulfonsäuren mit mindestens 3 C-Atomen in der Alkylkette, wie Dodecylbenzol- oder Dibutylnaphthalinsulfonsäuren und deren Alkali-, Erdalkali- oder Ammoniumsalze.

Weiterhin Oxyethylen-Gruppen enthaltende Fettsäure-Teilester mehrwertiger Alkohole wie Polyoxyethylenglycerinmonostearat; Polyoxyethylen-sorbitanmonolaurat, -oleat, -palmitat oder -stearat; Polyoxyethylenester von Fettalkoholen oder aromatischen Hydroxyverbindungen; Polyoxyalkylenester von Fettsäuren, sowie Polypropylenoxid-Polyethylenoxid-Kondensationsprodukte.

Kationische Emulgatoren ergeben zwar ebenfalls sinterfähige Formmassen, doch sind sie weniger vorteilhaft bei der Polymerisation verwendbar, da sie lange Polymerisationszeiten bewirken, so daß sie einen zu hohen Initiator-Einsatz erfordern, um wirtschaftlich vertretbar arbeiten zu können. Es können auch Mischungen verschiedener Emulgatoren in der Formmasse vorhanden sein.

Im allgemeinen reicht ein Emulgatorgehalt der Formmasse von 0,05 bis 0,5 Gew.-% aus, um gute gesinterte Formkörper, beispielsweise Separatoren für elektrische Zellen zu erhalten, jedoch kann ohne wesentlichen Qualitätsverlust die Formmasse bis zu 5 Gew.-% Emulgator enthalten. Als Komponente B kann also auch ein größerer Anteil eines durch Emulsions-Polymerisation hergestellten Vinylchlorid-Polymerisates mit einem vergleichsweise hohen Emulgatorgehalt von beispielsweise 4 Gew.-%, bezogen auf das Polymere, ohne nachteilige Wirkung auf die Verwendbarkeit in der Formmasse eingesetzt werden.

Entweder anstelle des Emulgators oder zusätzlich zu diesem enthält die Formmasse vorteilhaft 0,005 bis 0,5 Gew.-%, bezogen auf das Gemisch von mindestens einem wasserlöslichen Netzmittel, das ein quartäres N-Atom enthält, welches mit einer Carbon- oder Sulfonsäuregruppe ein Salz bildet. Unterhalb 0,005 Gew.-% wird die für eine gute Separatorplatten-Qualität erforderliche kapillare Steighöhe nicht erreicht, oberhalb 0,5 Gew.-% wird keine verbessernde Wirkung des Netzmittels mehr festgestellt, im Gegenteil können bei hohen Netzmittelgehalten Schwierigkeiten durch Schäumen auftreten, wenn die Separatorplatten in elektrischen Zellen eingesetzt werden, in denen sich beim Gebrauch oder während der Aufladung ein Gas entwickelt. Gute Ergebnisse werden erhalten, wenn die Formmasse 0,01 bis 0,1 Gew.-% von mindestens einem der beschriebenen Netzmittel enthält. Das verwendete Netzmittel soll ausreichend, das heißt bei 20 °C zu mehr als 2 Gew.-%, in Wasser löslich sein, 12 bis etwa 50 C-Atome und ein quartäres N-Atom enthalten, welches mit einer Carbon- oder Sulfonsäuregruppe ein Salz bildet. Unter einem "quartären N-Atom" ist ein N-Atom zu verstehen, das eine positive Ladung trägt und 4 Bindungen betätigt, wovon 1 bis 4 Bindungen mit C-Atomen und der Rest (3 bis 0) Bindungen mit H-Atomen sind.

Vorzugsweise werden als Netzmittel Verbindungen folgender Formeln eingesetzt:

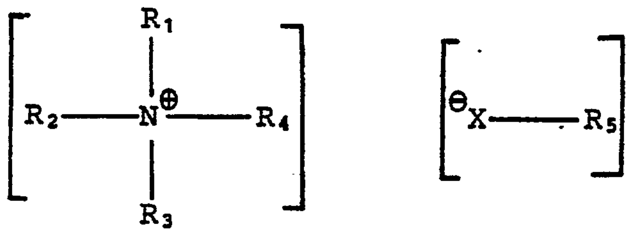

(I)

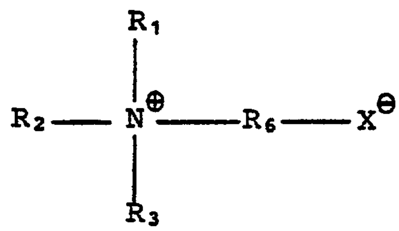

(II)

hierin bedeuten X eine $-COO^-$ oder eine $-SO_3^-$ = Gruppe
$R_1$ Wasserstoff oder eine Alkyl- oder eine Arylalkyl-Gruppe
$R_2$, $R_3$ und $R_4$ , jedes für sich eine Alkyl- oder eine Arylalkyl-Gruppe, die gegebenenfalls in der Alkylkette durch Ether-Sauerstoffbrücken unterbrochen sein kann, insbesondere so, daß $-C_2H_4O-$ oder $-C_3H_6O-$Gruppen in der Kette liegen;
$R_5$ einen Alkyl- oder Alkylaryl-Rest und
$R_6$ einen Alkylen-Rest, wobei alle Reste $R_1$ bis $R_6$ und gegebenenfalls auch X zusammen 12 bis etwa 50 Kohlenstoffatome enthalten und mindestens einer der Reste $R_1$ bis $R_4$ sowie der Rest $R_5$ je mindestens 8 Kohlenstoffatome enthalten.

Es können auch Mischungen mehrerer der oben näher beschriebenen Netzmittel verwendet werden.

Das bzw. die Netzmittel können bereits von der Polymerisation und Aufarbeitung her in einem oder mehreren der Polymeren vorhanden sein, die als Komponente A und/oder als Komponente B in dem erfindungsgemäßen Polymeren-Gemisch vorliegen.

Beispielsweise wenn diese Polymeren nach den US-Patenten 4,137,381 oder 4,323,661 hergestellt wurden.

Wenn der in den als Komponente A und B verwendeten Polymeren von der Herstellung vorhandene Tensid-Gehalt nicht ausreicht, wird dem Polymeren-Gemisch weiteres Tensid im Rahmen der oben angegebenen Mengen-Bereiche als Lösung, Dispersion oder in feiner Verteilung als Feststoff zugegeben, wobei das Polymeren-Gemisch zweckmäßig bewegt wird, um eine gleichmäßige Verteilung zu erzielen. Gegebenenfalls wird das Polymeren-Gemisch anschließend getrocknet.

Der K-Wert der Polymeren, die im erfindungsgemäßen Gemisch verwendet werden, liegt im Bereich von 55 bis 90. Unterhalb eines K-Wertes von 55 und oberhalb eines K-Wertes von 90 ist das Polymeren-Gemisch schwerer zu verarbeiten und ergibt im allgemeinen gesinterte Platten von geringerer Qualität.

Das Schüttgewicht des Polymeren-Gemisches liegt zweckmäßig im Bereich von 400 bis 700 g/l. Niedrigere Schüttgewichte führen im allgemeinen zu geringerem Produktionsausstoß sowie zu grobporigeren Platten mit weniger guten mechanischen Eigenschaften, höhere Schüttgewichte führen im allgemeinen zu Platten mit unerwünscht hohem elektrischem Durchgangswiderstand. Vorzugsweise werden Polymeren-Gemische mit einem Schüttgewicht von 450 bis 600 g/l eingesetzt.

Zur Herstellung von gesinterten Platten, die als Separatoren für elektrische Zellen Verwendung finden, sollte das Polymeren-Gemisch eine mittlere Korngröße (mittleren Korndurchmesser), gemessen durch Sedimentationsanalyse, von 10 bis 50 µm besitzen. Oberhalb einer mittleren Korngröße von 50 µm neigen die hergestellten Platten in zunehmendem Maße zur Grobporigkeit, unterhalb 10 µm mittlerer Korngröße neigt die Formmasse erheblich zum Stauben was die Verarbeitung stört. Vorzugsweise werden Polymeren-Gemische mit einer mittleren Teilchengröße von 20 bis 35 µm eingesetzt. Für die Bestimmung der mittleren Teilchengröße empfiehlt sich die Sedimentationsanalyse, da sie Teilchengrößenbereiche unter 33 µm genauer erfaßt und weniger anfällig gegen Störungen infolge elektrostatisischer Aufladung der Polymerteilchen ist.

Das erfindungsgemäße Polymeren-Gemisch enthält neben den weiter oben beschriebenen Bestandteilen noch Reste von Aktivatoren, Suspendiermitteln und gegebenenfalls weitere Hilfsstoffe, die bei der Herstellung der Polymeren verwendet wurden.

Die neue Formmasse kann ohne weiere Zusätze zur Produktion von gesinterten Formkörpern verwendet werden. In bestimmten Fällen kann es zweckmäßig sein, weitere Stoffe in geringen Mengen zuzusetzen. Solche Zusatzstoffe können beispielsweise sein: Antioxidantien, Thermostabilisatoren, Pigmente sowie Mittel zur Verbesserung der antistatischen Eigenschaften und Säuren.

Besonders vorteilhaft wird die erfindungsgemäße Formmasse zur Herstellung von Separatorplatten für elektrische Zellen eingesetzt.

Die neue Formmasse eignet sich besonders zur Produktion von Separator-Taschen mit guter Biegsamkeit gegenüber biegsamen Sinterplatten nach dem Stand der Technik, verbesserter Reißfestigkeit und einen erweiterten Sinter-Temperaturbereich, wodurch die Einstellung eines gewünschten niedrigen Durchgangswiderstandes der Platte erleichtert und die Maschinen-Verarbeitbarkeit der Separator-Taschen verbessert wird.

Die nachfolgenden Beispiele und Vergleichsversuche sollen die Erfindung näher erläutern. Der Übersichtlichkeit wegen wurden die Versuchsergebnisse in einer Tabelle zusammengefaßt. Die verschiedenen Eigenschaften wurden nach folgenden Methoden bestimmt:

<u>K-Wert:</u> nach DIN 53 726

<u>Schüttgewicht:</u> nach DIN 53 468

Kornverteilung: mittels Luftstrahl-Siebanalyse nach D-Entwurf Nr.53 734

<u>Mittlerer Korndurchmesser:</u> durch Sedimentationsanalyse nach folgendem Verfahren: 1,82 Gramm Polvinylchlorid werden in 600 ml einer 0,09 prozentigen Natriumpyrophosphat-Lösung, die gut entgast wurde, dispergiert und mit einer Sartorius-Sedimentationswaage vom Typ 4600 bei einer Vorschubgeschwindigkeit des Registrierpapiers von 120 mm/h die Absitztendenz gemessen. Die Ausrechnung erfolgt nach der bekannten Stoke'schen Formel und ergibt den Teilchenradius. Dieser wird mit dem Körnungsnetz nach Rosin-Ramler und Sperling ausgewertet.

<u>Bestimmungen an der gesinterten Platte</u>

Herstellung der Sinterplatten: Es werden Separatorplatten für elektrische Zellen auf einer kontinuierlichen Band-Sinteranlage hergestellt. Dabei wird auf ein endloses Stahlband Polyvinylchlorid-Pulver in bestimmter Schichtdicke aufgetragen und zur Sinterung durch einen Ofen geleitet, in dem durch elektrische Heizung eine Lufttemperatur von 225 °C eingestellt ist. Durch Variation der Bandgeschwindigkeit kann die Verweilzeit in der Sinterzone und damit die Stärke der Sinterung des PVC-Pulvers geregelt werden. Die Verweilzeit wird auf Werte zwischen 2,0 und 2,3 min eingestellt. Die Separatorplatten haben eine Blattstärke von 0,25 mm und eine Rippenstärke von 0,5 mm.

<u>Reißdehnung und Reißfestigkeit:</u>

In Anlehnung an DIN-Vorschrift 53 455 - Zugversuch von Kunststoffen - werden die Reißdehnung (Dehnung bei Reißkraft) und die Reißfestigkeit bestimmt. Da keine genormten Probekörper zur Verfügung stehen, werden aus den gesinterten Platten Prüflinge der Größe 60 • 140 mm geschnitten. Die Prüfung erfolgt auf einer Zugprüfmaschine entsprechend den allgemeinen Bedingungen für Zugprüfmaschinen (DIN 51 220, Klasse 1 sowie DIN 51 221) nach 16stündiger Lagerung im Normklima (DIN 5 001) bei 23 ± 2 °C und 50 ± 5 % relativer Luftfeuchtigkeit. Die Prüfgeschwindigkeit (Geschwindigkeit, mit der sich die beiden Einspannklemmen voneinander entfernen) beträgt 50 mm pro Minute 10 ± %. Der Kraft-Meßbereich liegt bei 10 N. Die Aufzeichnung von Kraft und Dehnung erfolgt über ein Schreibwerk auf einer Diagramm-Rolle. Der dehnungsproportionale Vorschub (Diagramm-Papier: Traverse) wird auf 5 zu 1 vergrößert eingestellt. Die Dehnung ist auf 100 mm freie Einspannlänge bezogen.

<u>Spezifischer elektrischer Widerstand:</u>

Die Ermittlung des elektrischen Widerstandes von Separatoren erfolgt über Messung des sogenannten Innenwiderstandes von Zellen, die in einer eigens dafür geschaffenen Prüfanordnung (Batterie-Zelle) gemessen wird. Die Differenz des Zellenwiderstandes mit und ohne Separator ergibt den Widerstand des Trennkörpers. Durch Multiplikation mit dem Quotienten aus Plattenfläche durch Plattendicke wird der spezifische Durchgangswiderstand in Ω. cm ermittelt.

Die Prüfzelle selbst besteht aus einer positiven und einer negativen Platte($PbO_2$ und Pb), die im Abstand von 7 mm parallel zueinander angebracht sind. Als Elektroden nimmt man Platten solcher Größe und Bauart, wie sie beim Bleiakkumulator verwendet werden. Genau zwischen den Elektroden, in einer fensterförmigen Aussparung der Größe 100 • 100 mm, befindet sich der Separator. Die Prüfzelle ist mit Schwefelsäure der Dichte 1,28 g/$cm^3$ gefüllt und voll aufgeladen. Die Messung solcher niederohmigen Innenwiderstände wird mit einem direkt anzeigenden Mikro-Ohm-Meter (Typ EMT 326, Firma Elektromeßtechnik E. Franz KG, Lahr) vorgenommen, welches an den beiden Elektroden angeschlossen ist. Sie erfolgt mit Netz-Wechselstrom.

<u>Kapillare Steighöhe:</u>

Als Maß für die Benetzbarkeit der Separatorplatten und zur Charakterisierung der Porosität dient die Ermittlung der kapillaren Steighöhe. Dabei wird ein 1 cm breiter Streifen des Separators in eine

Proberöhre gestellt, die 1,5 cm hoch mit Wasser gefüllt ist. Als kapillare Steighöhe wird die Höhe der Benetzbarkeit in Millimeter nach einer Tauchzeit von 10 Minuten angegeben.

Biegewinkel:

Aus den wie weiter oben beschrieben hergestellten gesinterten Platten werden Prüflinge der Größe 90 • 140 mm so herausgeschnitten, daß die Rippen parallel der 140 mm langen Schnittkante verlaufen. Dieser Prüfkörper wird zwischen zwei ebenen Metallplatten von je 2 mm Stärke, die die Maße 120 • 100 mm aufweisen und deckend übereinander liegen, so eingespannt, daß etwa die Hälfte des Prüfkörpers über die Platten hinausragt und die Rippen des Prüfkörpers senkrecht zu den Kanten der beiden Metallplatten verlaufen, über die der Prüfkörper hinausragt. Die beiden Metallplatten sind waagrecht liegend angeordnet, die Rippen des Prüfkörpers sollen nach unten gerichtet sein. Die Kante der oben liegenden Metallplatte, über die der Prüfkörper hinausragt, ist halbkreisförmig gerundet. Um diese Kante wird nun der herausragende Teil des Prüfkörpers innerhalb 2 s um einen bestimmten, vorgewählten Winkel nach oben umgebogen.
Zum Umbiegen wird eine weitere Metallplatte benutzt, die den herausragenden Teil des Prüfkörpers von unten erfaßt und um den vorgewählten Winkel wendet. Nach abgeschlossener Wendung wird die Stelle des Prüflings,die um die gerundete Kante der oberen Metallplatte herumgebogen wurde, auf Risse geprüft. Sofern solche Risse auftreten, ist die Platte unbrauchbar. Die Bestimmung wird bei Zimmertemperatur und etwa 60 % relativer Feuchtigkeit durchgeführt. Durch eine Vorprüfung wird ermittelt bei welchen ungefähren Biegewinkeln erste Risse auftreten. Mit der genaueren Messung wird 30 ° unterhalb des durch die Vorprüfung ermittelten Winkels angefangen.
Nachdem 5 Prüfkörper hintereinander die Biegung ohne Risse überstanden haben, wird der Biegewinkel um 10 ° erhöht und dann werden weitere 5 Prüfkörper untersucht. So wird verfahren,bis an einem Prüfkörper mindestens ein Riß auftritt. Der größte Biegewinkel, bei dem noch keine Risse auftreten, ist in nachfolgender Tabelle angegeben.

Vergleichsversuch A

Es wird ein Vinylchlorid-Suspensions-Homopolymerisat vom K-Wert 65 eingesetzt, welches nach dem Verfahren der DE-OS 24 02 314 hergestellt wurde. Nach der Polymerisation wurde N-Cocosalkyl-N,N-dimethyl-betain zugesetzt. Das Polymerisat enthält in seinem Polymer-Anteil 100 Gew.-% polymerisierte Vinylchlorid-Einheiten, Art und Menge der in der Formmasse enthaltenen Tenside sind in nachfolgender Tabelle angegeben, ebenso die Eigenschaften des Polymerisates sowie der daraus hergestellten gesinterten Platten. Das Polymerisat ist in der Tabelle mit a bezeichnet.

Vergleichsversuch B

Es wird ein durch Suspensionspolymerisation hergestelltes Pfropf-Copolymerisat vom K-Wert 70 verwendet, welches nach DE-OS 32 47 472 hergestellt wurde und in nachfolgender Tabelle mit b bezeichnet ist. Dieses Pfropf-Copolymerisat enthält in seinem Polymer-Anteil folgende polymerisierte Einheiten: 78,2 Gew.-% Vinylchlorid, 16,3 Gew.-% Ethylhexylacrylat, 0,65 Gew.-% Ethylen und 4,85 Gew.-% Vinylacetat. Bei der Polymerisation wird neben den Monomeren Vinylchlorid, Vinylacetat und Ethylhexylacrylat ein Ethylen-Vinylacetat-Copolymerisat verwendet, das 55 Gew.-%, bezogen auf das Copolymerisat, polymerisierte Einheiten des Ethylens aufweist. Dieses Copolymerisat geht vollständig in das erzeugte Pfropf-Copolymerisat, das 1,18 Gew.-% des Ethylen-Vinylacetat-Copolymeren enthält.

Dem Suspensions-Pfropf-Copolymerisat wird nach der Polymerisation N-Cocosalkyl-N,N-dimethylbetain zugesetzt. Die in der Formmasse enthaltenen Tenside sind nach Art und Menge in nachfolgender Tabelle angegeben, ebenso wie die Eigenschaften der Formmasse und der daraus hergestellten gesinterten Platten.

Vergleichsversuch C

Es wird ein Suspensions-Pfropfpolymerisat vom K-Wert 65 eingesetzt, welches nach DE-OS 30 18 922 hergestellt wurde und in seinem Polymeranteil folgende polymerisierte Einheiten enthält: 93,0 Gew.-% Vinylchlorid und 7,0 Gew.-% Ethylen-Vinylacetat-Copolymerisat, das seinerseits aus 3,15 Gew.-% Vinylacetat und 3,85 Gew.-% Ethylen besteht. Das Pfropfpolymerisat wird in der nachstehenden Tabelle mit c bezeichnet. Der Tensidgehalt der Formmasse ist ebenfalls in der Tabelle angegeben.

Beispiele 1 bis 6

Es werden als Komponente IA Suspensions-Pfropfcopolymerisate von Vinylchlorid auf Ethylen-Vinylacetat-Copolymere folgender Zusammensetzung eingesetzt:

| Gew.-% polymerisierte Einheiten des Vinylchlorids | Gew.-% einpolymerisiertes Ethylen-Vinylacetat-Copolymeres | Ethylen/Vinylacetat-Gewichtsverhältnis im Copolymeren | K-Wert | Bezeichnung in der Tabelle |
|---|---|---|---|---|
| 90 | 10 | 5,5 : 4,5 | 70 | d1 |
| 85 | 15 | 5,5 : 4,5 | 65 | d2 |
| 80 | 20 | 5,5 : 4,5 | 60 | d3 |
| 80 | 20 | 6 : 4 | 65 | d4 |

Als Komponente IB dient bei den Beispielen 1 bis 4 und 6 das im Vergleichsversuch A verwendete Polymere a, beim Beispiel 5 ein durch Emulsions-Polymerisation erzeugtes Vinylchlorid-Polymerisat mit K-Wert 71, das in seinem Polymer-Anteil 100 Gew.-% polymerisierte Einheiten des Vinylchlorids und daneben als Emulgator die Natriumsalze eines weiter unten näher beschriebenen Alkansulfonsäuregemisches,außerdem ein Ethylenoxid-Propylenoxid-Blockcopolymer enthält. Letzteres Emulsions-Vinylchlorid- Homopolymerisat ist in nachfolgender Tabelle mit e bezeichnet. Aus der Tabelle sind ferner der Gehalt der Formmasse an Tensiden nach Art und Menge ersichtlich. Sofern die eingesetzten Komponenten IA und IB diese Tenside nicht schon von der Herstellung enthalten, wurden sie dem Gemisch der Komponenten nachträglich zugesetzt. Das gleiche gilt für die in der Tabelle aufgeführten "weiteren Zusätze".

Die Abkürzungen in Zeile 1 der nachfolgenden Tabelle bedeuten:
Gew.-% = Gewichtsprozente, bezogen auf die Formmasse
Gew.-% *) = Gewichtsprozente, bezogen auf die Formmasse einschließlich des Zusatzes
SG = Schüttgewicht
Korn-Ø Korndurchmesser
RF = Reißfestigkeit
RD = Reißdehnung
spez. DW = spezifischer Durchgangswiderstand
KS = kapillare Steighöhe
BW = Biegewinkel.

Die in der zweiten und vierten senkrechten Spalte angegebenen Abkürzungen für die Art der verwendeten Polymeren sind weiter oben erklärt; die Abkürzungen in der sechsten und achten Spalte bedeuten:
CDMB = N-Cocosalkyl-N,N-dimethyl-betain, wobei "Cocosalkyl" ein Alkylgruppen-Gemisch folgender Kettenlängenverteilung (in %) bedeutet: $C_8$ = 7; $C_{10}$ = 6; $C_{12}$ = 51; $C_{14}$ = 19; $C_{16}$ = 8; $C_{18}$ = 9.
SDMB = N-Stearyl-N,N-dimethyl-betain
DBS = n-Dodecylbenzolsulfonsäure
AS = n-Alkansulfonsäure mit verschiedenen Kettenlängen von $C_{12}$ bis $C_{16}$ mit einem überwiegenden Gehalt an $C_{14}$
ASNa = Natriumsalze des vorangehend beschriebenen Gemisches verschiedener n-Alkansulfonsäuren
EPB = Ethylenoxid-Propylenoxid-Block-Copolymerisat
CS = Gemisch gesättigter Monocarbonsäuren der Kettenlängen $C_{16}$ bis $C_{18}$
$H_3PO_4$ = Orthophosphorsäure.

TABELLE

| Vergleichs-Versuch Beispiel-Nr. | Komponenten in der Formmasse IA Art | IA Menge Gew.-% | IB Art | IB Menge Gew.-% | II Art | II Menge Gew.-% | Weitere Zusätze Art | Menge Gew.-% *) | Gehalt an EVAc in der Formmasse Gew.-% | Eigenschaften der Formmasse SG g/dm$^3$ | mittl. Korn-Ø µm | Kornverteilung Gew.-% <33 µm | 33 - 63 µm | 63 - 125 µm | > 125 µm | Eigenschaften der gesinterten Platte RF Nmm$^{-2}$ | RD % | spez. DW Ω · cm | Ks. mm | BN ° |
|---|---|---|---|---|---|---|---|---|---|---|---|---|---|---|---|---|---|---|---|---|
| A | - | - | a | 99,82 | COMB | 0,03 | - | - | - | 420 | 24 | 82 | 12 | 5,5 | 0,5 | 11,5 | 5,5 | 5,6 | 127 | 70 |
| | | | | | DBS | 0,15 | | | | | | | | | | | | | | |
| B | b | 99,82 | - | - | COMB | 0,03 | - | - | 1,18 | 590 | 27 | 63 | 27 | 9 | 1 | 5,2 | 18,0 | 10,0 | 77 | 130 |
| | | | | | DBS | 0,15 | | | | | | | | | | | | | | |
| C | c | 99,82 | - | - | COMB | 0,03 | - | - | 6,99 | 655 | 29 | 72 | 27 | 0,8 | 0,2 | 9,2 | 6,0 | 6,0 | 98 | 100 |
| | | | | | DBS | 0,15 | | | | | | | | | | | | | | |
| 1 | $d_1$ | 49,91 | a | 49,91 | COMB | 0,03 | - | - | 4,99 | 555 | 30 | 76 | 20 | 3,5 | 0,5 | 8,4 | 9,1 | 6,9 | 79 | 180 |
| | | | | | DBS | 0,15 | | | | | | | | | | | | | | |
| 2 | $d_2$ | 24,95 | a | 74,87 | COMB | 0,03 | - | - | 3,74 | 520 | 26 | 80 | 17 | 2 | 1 | 10,1 | 8,5 | 6,4 | 98 | 180 |
| | | | | | DBS | 0,15 | | | | | | | | | | | | | | |
| 3 | $d_2$ | 39,92 | a | 59,90 | COMB | 0,03 | $H_3PO_4$ | 0,03 | 5,99 | 580 | 28 | 78 | 18 | 3 | 1 | 10,0 | 10,2 | 7,1 | 95 | 180 |
| | | | | | DBS | 0,15 | | | | | | | | | | | | | | |
| 4 | $d_3$ | 15,97 | a | 83,85 | COMB | 0,025 | - | - | 3,19 | 540 | 28 | 76 | 19 | 4 | 1 | 10,2 | 9,3 | 7,0 | 105 | 180 |
| | | | | | SDMB | 0,005 | | | | | | | | | | | | | | |
| | | | | | DBS | 0,15 | | | | | | | | | | | | | | |
| 5 | $d_2$ | 44,92 | e | 53,60 | COMB | 0,013 | CS | 0,39 | 6,74 | 520 | 27 | 71 | 26 | 2,5 | 0,5 | 9,6 | 8,9 | 8,1 | 101 | 180 |
| | | | | | DBS | 0,067 | | | | | | | | | | | | | | |
| | | | | | ASNa | 1,220 | | | | | | | | | | | | | | |
| | | | | | EPB | 0,180 | | | | | | | | | | | | | | |
| 6 | $d_4$ | 54,90 | a | 44,92 | COMB | 0,03 | - | - | 11,0 | 585 | 29 | 80 | 14 | 5 | 1 | 10,0 | 9,8 | 7,1 | 87 | 180 |
| | | | | | DBS | 0,067 | | | | | | | | | | | | | | |
| | | | | | AS | 0,083 | | | | | | | | | | | | | | |

## Patentansprüche

1. Sinterfähige, feinteilige Formmasse, die besteht aus
I) 99,95 bis 95 Gew.-%, bezogen auf die Formmasse, von einem Gemisch aus mindestens zwei Polymeren auf Basis von Vinylchlorid, in dem jedes der Polymeren einen K-Wert von 55 bis 90 und die Polymeren-Mischung eine mittlere Korngröße von 10 bis 50 µm, ein Schüttgewicht von 400 bis 700 g/dm³ und eine Kornverteilung von
99 bis 30 Gew.-%, bezogen auf die Mischung, < 33 µm
1 bis 60 Gew.-%, bezogen auf die Mischung, von 33 bis 63 µm
0 bis 9 Gew.-%, bezogen auf die Mischung, von 63 bis 125 µm
0 bis 1 Gew.-%, bezogen auf die Mischung, >125 µm aufweist und
II) 0,05 bis 5 Gew.-%, bezogen auf die Formmasse von mindestens einem wasserlöslichen Tensid, das ein Bestandteil eines oder mehrerer Polymerer sein kann, die vorstehend unter I) genannt sind,
dadurch gekennzeichnet, daß das Polymerengemisch I) enthält:
A) 70 bis 15 Gew.-%, bezogen auf das Polymerengemisch, von einem durch Suspensions-Polymerisation in wäßriger Phase hergestellten, sinterfähigen Pfropf-Copolymeren, dessen Polymeranteil besteht aus
a) 92 bis 75 Gew.-%, bezogen auf das Pfropfcopolymere, polymerisierten Einheiten des Vinylchlorids und
b) 8 bis 25 Gew.-%, bezogen auf das Pfropf-Copolymere, eines einpolymerisierten Copolymeren, das Ethylen und Vinylacetat im Gewichtsverhältnis 7 : 3 bis 3 : 7 enthält, sowie
B) 30 bis 85 Gew.-%, bezogen auf das Polymerengemisch, von einem oder mehreren sinterfähigen Polymeren, das (die) weitgehend aus polymerisierten Einheiten des Vinylchlorids besteht (bestehen), mit der Maßgabe, daß das Polymerengemisch I) 2 bis 12 Gew.-%, bezogen auf dieses Gemisch, einpolymerisiertes Copolymeres aus Ethylen und Vinylacetat enthält.

2. Formmasse nach Anspruch 1, dadurch gekennzeichnet, daß das Polymerengemisch I) 3 bis 7 Gew.-%, bezogen auf dieses Gemisch, einpolymerisiertes Copolymeres aus Ethylen und Vinylacetat enthält.

3. Formmasse nach Anspruch 1 oder 2, dadurch gekennzeichnet, daß die Komponente B des Polymerengemischs I) ausschließlich polymerisierte Einheiten des Vinylchlorids enthält.

4. Formmasse nach einem oder mehreren der Ansprüche 1 bis 3, dadurch gekennzeichnet, daß mindestens ein in der Formmasse enthaltenes wasserlösliches Tensid ein für die Polymerisation von Vinylchlorid bekannter oberflächenaktiver Emulgator ist.

5. Formmasse nach einem oder mehreren der Ansprüche 1 bis 4, dadurch gekennzeichnet, daß das wasserlösliche Tensid ein quartäres N-Atom enthält.

6. Formmasse nach einem oder mehreren der Ansprüche 1 bis 5, dadurch gekennzeichnet, daß sie 0,05 bis 2 Gew.-%, bezogen auf die Formmasse, von mindestens einem wasserlöslichen Tensid enthält.

7. Verwendung der Formmasse nach einem oder mehreren der Ansprüche 1 bis 6 zur Herstellung von gesinterten Formkörpern, die als Separatoren in elektrischen Zellen dienen.

## Claims

1. A sinterable, finely divided molding material which is composed of
I) 99.95 to 95% by weight, relative to the molding material, of a mixture of at least two polymers based on vinyl chloride, in which each of the polymers has a K-value of 55 to 90 and the mixture of polymers has an average particle size of 10 to 50 µm, a bulk density of 400 to 700 g/dm³ and a particle size distribution of
99 to 30% by weight, relative to the mixture, < 33, µm,
1 to 60% by weight, relative to the mixture, from 33 to 63 µm,
0 to 9% by weight, relative to the mixture, from 63 to 125 µm,
and
0 to 1% by weight, relative to the mixture, > 125, µm, and
II) 0.05 to 5% by weight, relative to the molding material, of at least one water-soluble surfactant which can be a constituent of one or more polymers mentioned above under I,
characterised in that the polymer mixture I contains:
A) 70 to 15% by weight, relative to the polymer mixture, of a sinterable graft copolymer which has been prepared by suspension polymerisation in an aqueous phase and in which the polymer component is composed of
a) 92 to 75% by weight, relative to the graft copolymer, of polymerised units of vinyl chloride and
b) 8 to 25% by weight, relative to the graft copolymer, of a polymerised-in copolymer containing ethylene and vinyl acetate in a ratio of 7:3 to 3:7 by weight, and
B) 30 to 85% by weight, relative to the polymer mixture, of one or more sinterable polymers substantially composed of polymerised units of vinyl chloride, subject to the proviso that the polymer mixture I contains 2 to 12% by weight, relative to this mixture, of the polymerised-in copolymer of ethylene and vinyl acetate.

2. A molding material as claimed in claim 1, characterised in that the polymer mixture I contains 3 to 7% by weight, relative to this mixture, of a polymerised-in copolymer of ethylene and vinyl acetate.

3. A molding material as claimed in claim 1 or 2, characterised in that the component B of the polymer mixture I contains solely polymerised units of vinyl chloride.

4. A molding material as claimed in one or more of claims 1 to 3, characterised in that at least one water-soluble surfactant present in the molding material is a surface-active emulsifier which is known for the polymerisation of vinyl chloride.

5. A molding material as claimed in one or more of claims 1 to 4, characterised in that the water-soluble surfactant contains a quaternary nitrogen atom.

6. A molding material as claimed in one or more of claims 1 to 5, characterised in that it contains 0.05 to 5% by weight, relative to the molding material, of at least one water-soluble surfactant.

7. The use of the molding material as claimed in one or more of claims 1 to 6 for the production of sintered moldings which are used as separators in electric cells.

## Revendications

1. Matière à mouler en fines particules, frittable, constituée:

I) de 99,95 à 95% en poids, par rapport à la matière à mouler, d'un mélange d'au moins deux polymères à base de chlorure de vinyle, chacun des polymères ayant une valeur K de 55 à 90 et le mélange de polymères ayant une granularité moyenne de 10 à 50 µm, une masse volumique apparente de 400 à 700 g/dm³ et une distribution granulométrique du type suivant:

de 99 à 30% en poids, par rapport au mélange, < 33 mm,

de 1 à 60% en poids, par rapport au mélange, de 33 à 63 µm,

de 0 à 9% en poids, par rapport au mélange, de 63 à 125 µm, et

de 0 à 1% en poids, par rapport au mélange, > 125 µm, et

II) de 0,05 à 5% en pooids, par rapport à la matière à mouler, d'au moins un surfactif hydrosoluble qui peut être un constituant d'un ou de plusieurs des monomères qui ont été mentionnés ci-dessus sous I),

matière à mouler, caractérisée en ce que le mélange de polymères I contient:

A) de 70 à 15% en poids, par rapport au mélange de polymères, d'un copolymère greffé frittable qui a été préparé par polymérisation en suspension en phase aqueuse et dont la fraction polymère est constituée:

a) de 92 à 75% en poids, par rapport au copolymère greffé, de motifs polymérisés du chlorure de inyle,

b) de 8 à 25% en poids, par rapport au copolymère greffé, d'un copolymère incorporé par polymérisation et contenant de l'éthylène et de l'acétate de vinyle dans un rapport pondéral compris entre 7:3 et 3:7, et

B) de 30 à 85% en poids, par rapport au mélange de polymères, d'un ou de plusieurs polymères frittables constitués essentiellement de motifs polymérisés du chlorure de vinyle,

avec la condition que le mélange de polymères I) contienne de 2 à 12% en poids, par rapport à ce mélange, d'un copolymère d'éthylène et d'acétate de vinyle incorporé par polymérisation.

2. Matière à mouler selon la revendication 1, caractérisée en ce que le mélange de polymères I) contient de 3 à 7% en poids, par rapport à ce mélange, d'un copolymère d'éthylène et d'acétate de vinyle incorporé par polymérisation.

3. Matière à mouler selon l'une des revendications 1 et 2, caractérisée en ce que la composante B) du mélange de polymères I) contient exclusivement des motifs polymérisés du chlorure de vinyle.

4. Matière à mouler selon l'une quelconque des revendications 1 à 3, caractérisée en ce qu'au moins un surfactif hydrosoluble contenu dans la matière à mouler est un émulsionnant surfactif connu pour la polymérisation du chlorure de vinyle.

5. Matière à mouler selon l'une quelconque des revendications 1 à 4, caractérisée en ce que le surfactif hydrosoluble contient un atome d'azote quaternaire.

6. Matière à mouler selon l'une quelconque des revendications 1 à 5, caractérisée en ce qu'elle contient de 0,05 à 2% en poids, par rapport à la matière à mouler, d'au moins un surfactif hydrosoluble.

7. Application de la matière à mouler selon l'une quelconque des revendications 1 à 6 à la fabrication d'objets moulés frittés servant de séparateurs dans des cellules électriques.